# EUROPÄISCHE PATENTSCHRIFT

(11) **EP 1 448 350 B1**
(45) Veröffentlichungstag und Bekanntmachung des Hinweises auf die Patenterteilung: **06.04.2005**
(21) Anmeldenummer: 02790412.7
(22) Anmeldetag: 20.11.2002
(51) Int. Cl.: B29C 44/58, B29C 44/44, B29C 33/30

(54) **FORMWERKZEUG ZUR HERSTELLUNG VON PARTIKELSCHAUMFORMTEILEN**
FORM TOOL FOR PRODUCING PARTICLE FOAM MOULDED PARTS
MOULE DESTINE A LA PRODUCTION DE PIECES MOULEES EN MOUSSE A BASE DE PARTICULES

(30) Priorität: 20.11.2001 DE 10156590
(43) Veröffentlichungstag der Anmeldung: 25.08.2004
(73) Patentinhaber: Fagerdala Deutschland GmbH, 99885 Ohrdruf (DE)
(72) Erfinder: LANG, Eberhard, 74080 Heilbronn (DE); JAHNKE, Rüdiger, 99867 Gotha (DE); ZIEGLER, Maik, 99887 Gräfenhain (DE); BRUNING, Jürgen, 33824 Werther (DE); WACKER, Kai, 71229 Leonberg (DE); HOFMANN, Knut, 99898 Finsterbergen (DE)
(74) Vertreter: Kaewert, Klaus
(86) Internationale Anmeldenummer: PCT/EP2002/013014
(87) Internationale Veröffentlichungsnummer: WO 2003/043795

(56) Entgegenhaltungen:
- WO-A-86/02877
- US-A- 3 596 869
- US-A- 4 206 166
- US-A- 5 031 483

## Beschreibung

Die Erfindung betrifft ein Formwerkzeug zur Herstellung von Partikelschaumformteilen, mit mindestens einem aus einer endlichen Anzahl von zumindest segmentweise parallel zueinander angeordneten Schichten zusammengesetzten Werkzeugteil, bei dem die einzelnen Schichten so konturiert sind, dass ein aus der Gesamtheit aller Schichten gebildeter Stapel mindestens einen Teil eines Formhohlraums definiert, der mit expandierbaren Schaumstoffperlen ("beads") eines thermoplastischen Kunststoffs gefüllt werden kann, sowie mit Mitteln zur Zu- und Abführung von gasförmigen und flüssigen Wärmeträgern zu bzw. von den den Formhohlraum umgrenzenden Schichten.

Partikelschaumstoffe sind thermoplastische Schaumkunststoffe, die aus vorexpandierten, noch weiter expandierbaren Schaumstoffteilchen zu Blöcken oder Formteilen zusammengeschweißt sind. Die Formgebung und das Verschweißen erfolgen im Dampfstoßverfahren in speziell dafür gebauten Formwerkzeugen.

Die bekannten Formwerkzeuge sind aus gefrästen Aluminiumplatten oder gegossenem Aluminium gefertigt, die nachträglich mit Bohrungen versehen werden, um Düsen einzusetzen, durch welche Heißdampf in den Formhohlraum unter hohem Druck eingeblasen werden kann.

Beads aus expandierbarem Polystyrol (EPS), Polyethylen (EPE) oder Polypropylen (EPP) werden in den Formhohlraum des Werkzeugs eingeblasen und verdichtet. Die beiden in einer Dampfkammer befindlichen Formwerkzeughälften und die sich darin befindliche entlüftete Partikelschüttung werden dann durch abwechselnde Beaufschlagung der beiden Dampfkammerhälften mit Heißdampf durchdrungen. Dadurch werden die Partikel zumindest oberflächlich auf eine Temperatur erhitzt, die zum oberflächlichen Verschweißen bzw. Versintern der Partikel führt (thermische und stoffschlüssige Verbindung). Danach wird die dem Partikelschaum abgewandte Seite des Formwerkzeugs mit Kühlwasser oder einem anderen Kühlmedium beaufschlagt, wodurch nicht nur das Werkzeug gekühlt wird, sondern auch das entstandene Partikelschaumformteil stabilisiert wird.

Einzelaspekte der Herstellung und Verwendung laminierter Formwerkzeuge sind aus der Patentliteratur bekannt:

So beschreibt die DE-A1-42 17 988 die Herstellung von Prototypen formgebender Werkzeuge aus übereinandergestapelten dünnen Schichten, aus denen durch Laser- oder Wasserschneiden Konturen herausgeschnitten wurden, deren Gesamtheit die formgebende Oberfläche des herzustellenden Werkzeugs bildet.

Im US-Patent 2 679 172 ist ein Außenhochdruck-Tiefziehwerkzeug beschrieben, dessen Matrize aus horizontal in eine Aufnahme gestapelten konturgeschnittenen Schichten gebildet wird. Durch Austauschen, Einlegen oder Entfernen einzelner Bereiche dieser Matrize kann schnell und einfach die Geometrie des Formhohlraums, und damit des entstehenden Werkstücks, verändert werden.

In DE-A1-44 09 556 ist ein Biegewerkzeug beschrieben, insbesondere für das Gesenkbiegen von Blechbiegeteilen. Dieses Werkzeug in Form eines Biegestempels und/oder einer Matrize ist aus einem Paket einzelner Lamellen zusammengesetzt, die in Richtung der Biegeachse des Werkzeugs flächig aneinandergereiht und zu einem Paket zusammengefügt sind.

In dem US-Patent 5 031 483 ist die Herstellung von Tiefziehwerkzeugformen aus konturgeschnittenen dünnen, parallel zur Werkzeugtrennebene angeordneten Schichten beschrieben. Dabei ist das direkte Einbringen von Kühl- oder Temperierkanälen vorgesehen. Außerdem ist dort die Möglichkeit beschrieben, zwischen einigen ausgesuchten Schichten Abstandshalter anzubringen, um Druckluft oder Vakuum an die Werkstückoberfläche zu bringen. Ein flächiger Eintrag von Medien zum Verschweißen oder Kühlen wird dadurch jedoch nicht ermöglicht. Die Kühlung erfolgt vorwiegend über Wärmeleitung Die bei der Herstellung von Partikelschaumformteilen wichtige gleichmäßige Entlüftung des Formwerkzeugs während der Befüllung ist nicht gegeben.

Aus der EP-A1-0 908 286 sind Partikelschaumformwerkzeuge bekannt, die in Form zweier Halbschalen mit bedüsten Stegen mit Hilfe der Stereolithographie hergestellt werden. Die Halbschalen werden mit einem temperaturbeständigen Harz hinterfüllt, um dem Werkzeug die erforderliche Stabilität zu verleihen.

Aus der DE-A1-195 00 601 sind Partikelschaumformwerkzeuge aus Silikon bekannt, die durch gleiche Druckführung auf beiden Seiten einer Werkzeughälfte mechanisch stabilisiert werden.

Gemäß DE-A1-33 30 826 und EP-A1-0 720 528 können die optischen Nachteile, die durch Düsenabdrücke auf der Oberfläche von Schaumstoffformkörpern entstehen, durch Verwendung einer flächig feinporösen Werkzeugoberfläche vermieden werden. Dazu werden Formen verwendet, die ganz oder überwiegend aus Sintermetall bestehen.

In der WO 94/09973 wird zur Verminderung des Energieverbrauches der Herstellung von Partikelschaumformteilen eine thermische Isolierung des Formteilwerkzeugs vorgeschlagen, zumal der Energiebedarf zur Verschweißung der Schaumpartikel bei herkömmlichen Verfahren unterhalb von 1 % der für die Formteilherstellung aufzuwendenden Energie liegt. Längere Zykluszeiten, vor allem aber die mangelnde mechanische und thermische Beständigkeit der Isolierschichten beschränken dieses Verfahren jedoch auf Polystyrol-Schaumpartikel, die bei niedrigen Temperaturen und Dampfdrücken verarbeitet werden.

Der Erfindung liegt die Aufgabe zugrunde, ein Formwerkzeug zur Herstellung von Partikelschaumformteilen der eingangs genannten Gattung so weiterzubilden und zu verbessern, dass eine schnellere, computergestützte Herstellung von Partikelschaumformteilen mit guter Oberflächenqualität und gleichmäßiger Verschweißung der Schaumpartikel ermöglicht werden und gleichzeitig die erforderliche Dampf- und damit Energiemenge deutlich gesenkt werden kann.

Diese Aufgabe wird erfindungsgemäß bei einem Formwerkzeug der eingangs genannten Gattung dadurch gelöst, dass die Schichten mindestens in ihren dem Formhohlraum benachbarten Bereichen in einem definierten Abstand voneinander unter Bildung von Kanälen angeordnet sind, die nach außen hin dicht verschlossen sind, aber im Inneren des Werkzeugteils für den Durchtritt der gasförmigen und flüssigen Wärmeträger offen sind.

Die erfindungsgemäße Lösung der genannten Aufgabe wird durch einen schichtförmigen Aufbau erzielt, der durch definierte Abstände aller einzelnen Schichten zueinander eine gleichmäßige Zuführung der thermischen Wirkmedien zum Verschweißen der Schaumpartikel bzw. Beads und zum Abkühlen der Schaumstoffpartikel, des daraus gebildeten Formkörpers und des Formwerkzeugs bewirkt, aber auch der schnellen Entlüftung des Werkzeugs beim Befüllen dient. Als thermische Wirkmedien werden vorzugsweise Heißdampf zum Erhitzen und Wasser zum Kühlen verwendet. Der laminierte Aufbau des erfindungsgemäßen Formwerkzeugs führt zu einer homogenen, flächigen, allseitigen Zuführung von Heißdampf und Kühlwasser direkt in den Formhohlraum im Inneren des Werkzeugs und garantiert so eine schnelle Erhitzung und schnelle Abkühlung der Schaumpartikel, was gegenüber der früheren Verwendung separater Dampfkammern nicht nur zu erheblichen konstruktiven Einsparungen führt, sondern auch zu einem erheblichen Minderverbrauch an Dampf und Energie. Da das erfindungsgemäße Formwerkzeug keine Dampfdüsen aufweist, die gleichzeitig einen Teil der Oberfläche des Formhohlraums bilden, können die mit dem erfindungsgemäßen Werkzeug hergestellten Partikelschaumformteile keine störenden Dampfdüsenabdrücke auf der Oberfläche aufweisen, was zu einer optischen Verbesserung und zu einem homogenen Oberflächenbild der Formteile führt.

Vorzugsweise bestehen die Schichten aus einem gut wärmeleitenden metallischen Werkstoff, und sie werden beispielsweise in Form von dünnen Lamellen oder Blechen hergestellt. Besonders bevorzugt bestehen die Schichten aus Stahlblech, Aluminium oder einer Aluminiumlegierung.

Die Schichten werden aus dem gewünschten Werkstoff vorzugsweise rechnergesteuert ausgeschnitten, so dass die Konturen des herzustellenden Partikelschaumformteils von Anfang an exakt vorgegeben sind, ohne dass es einer späteren Nachbearbeitung der Konturen bedarf. Zum Ausschneiden der Schichten können in der Metallbearbeitung übliche Schneidtechniken angewandt werden, beispielsweise das Laserschneiden oder das Wasserstrahlschneiden. Die Schichten können aber auch nach einem für die Herstellung von Prototypen bekannten, computergesteuerten Verfahren hergestellt werden, beispielsweise durch das "laminated object manufacturing (LOM)-Verfahren".

Bei einer vorteilhaften Ausführungsform des erfindungsgemäßen Formwerkzeugs weisen die Schichten Durchbrechungen auf, die von massiven Stegen unterteilt und so angeordnet sind, dass in einem aus der Gesamtheit aller Schichten gebildeten Stapel mehrere Kammern gebildet sind, die das Werkzeugteil durchsetzen. Das große Volumen dieser Kammern senkt in vorteilhafter Weise die Gesamtmasse des Werkzeugs, begünstigt eine schnelle und wirksame Verteilung der gasförmigen und flüssigen Wärmeträger, worunter vorzugsweise Heißdampf und Kühlwasser zu verstehen sind, und führen zu deutlich geringeren Energieverlusten als die im Stand der Technik benötigten zusätzlichen Dampfkammern, die erfindungsgemäß entfallen können, da die durch die Durchbrechungen der Schichten entstehenden Kavitäten selbst die Funktion einer Dampfkammer und zugleich die Funktion eines Kühlwasserspeichers übernehmen.

Ein besonderer Vorteil des erfindungsgemäßen Formwerkzeugs besteht also darin, dass die Konturen der formgeschnittenen Schichten sowohl die formgebende Werkzeugwand als auch Dampfkammer, Medienführung und Abstützung abbilden. Dadurch werden die Werkzeugmasse reduziert, der Energiebedarf und damit die laufenden Betriebskosten vermindert und der Aufbau des Werkzeugs vereinfacht.

Vorzugsweise weist mindestens jede zweite Schicht eines Stapels mindestens einen als Wärmeaustauschfläche wirkenden Fortsatz auf, der in die Durchbrechungen bzw. Kammern hineinragt. Dies führt zu einem schnelleren Wärmetransport in beiden Richtungen, also zu einer schnelleren Erhitzung, wenn Heißdampf oder ein anderes Heizgas durch die Kammern geleitet wird, und zu einer schnelleren Abkühlung, wenn Wasser oder ein anderes Kühlmedium durch die Kammern strömt.

Vorzugsweise besitzt das erfindungsgemäße Formwerkzeug nur eine einzige Zuleitung und eine einzige Ableitung für die als Heiz- oder Kühlmedium verwendeten Wärmeträger, da die Gesamtkonstruktion für den Durchstrom gasförmiger und flüssiger Wärmeträger gleichermaßen geeignet ist.

Die Abstände werden durch ein- oder beidseitige Prägungen, Einfräsungen oder geätzte Vertiefungen in den Schichten gebildet, wobei die Prägungen vorzugsweise als Wellen, Kanäle, Riffelungen oder Noppen in Form von Kegel- oder Pyramidenstümpfen ausgebildet sind. Besonders bevorzugt ist eine regelmäßige Verteilung der Prägungen in Form von Noppen oder Wellen, um eine gegenseitige Fixierung bzw. eine parallele Zentrierung der Schichten zu erreichen, was auch durch Stifte, die sich ineinander verzahnen, bewerkstelligt werden kann.

Um das Entweichen der Medien nach außen und ein direktes Durchströmen der Medien durch die Trennebene zwischen zwei Formhälften hindurch in die jeweils andere Werkzeughälfte zu verhindern, werden die Schichten an den Außenseiten des Formwerkzeugs dicht miteinander verbunden, und zwar vorzugsweise durch stoffliches Fügen wie Schweißen, Diffusionsschweißen, Verkleben, Verschrauben oder Verlöten. Die Schichten können auch durch Verlöten mit anderen Dünnschichten, die einen niedrigeren Schmelzpunkt besitzen als sie selbst, verbunden werden.

Die Abdichtung des erfindungsgemäßen Formwerkzeugs zum Außenbereich und zur Trennebene kann durch Einbringen von flüssigen, aushärtenden Stoffen in die äußeren Zwischenräume zwischen den Schichten sowie durch Verkleben, Verschweißen oder Verlöten erfolgen. Dabei kann Lot oder Dichtungsmasse auch schon auf den Einzelschichten aufgetragen sein und erst nach deren Stapelung bzw. Zusammenbau durch Erhitzen zu der gewünschten abdichtenden Wirkung gelangen. Als Dichtungsmassen können hierfür Silikone und aluminiumgefüllte Harze und andere bekannte Dichtmassen verwendet werden. Vorzugsweise kann auch eine vollständige Metallhülle um das Formwerkzeug angebracht werden, die die Kanäle zwischen den Schichten nach außen druckdicht verschließt.

Bei einer anderen bevorzugten Ausführungsform des erfindungsgemäßen Formwerkzeugs sind mehrere Stapel von parallel angeordneten Schichten mit unterschiedlichen Schichtrichtungen miteinander verbunden. Die parallelen Schichten können unter einem oder mehreren vom rechten Winkel zur Werkzeugtrennebene abweichenden Winkeln verlaufen. Diese Ausführungsformen der Erfindung sind besonders geeignet, um Hinterschnitte in den herzustellenden Partikelschaumformteilen darstellen und die Stufigkeit verringern zu können. Einzelne Stapel, Pakete oder Cluster von miteinander verbundenen Schichten können somit in beliebigen und unterschiedlichen Winkeln zueinander angeordnet werden und in ihrer Gesamtheit mindestens zwei Werkzeugteile bilden, die gemeinsam das Formwerkzeug darstellen.

Bei anderen Ausführungsformen der Erfindung können die Stirnseiten der Schichten, die den Formhohlraum begrenzen, eine strukturierte Oberfläche aufweisen, insbesondere eine geprägte oder geätzte Oberfläche. Die so strukturierte Oberfläche kann beispielsweise quadratische oder runde, erhabene oder vertiefte Querschnitte aufweisen und damit eine Art "Nadelkissen" bilden, welches den Formhohlraum umgrenzt.

Es hat sich überraschenderweise gezeigt, dass die Strukturierung der Oberfläche der Stirnseiten das Reibungsgeräuschverhalten der fertigen Partikelschaumformteile stark beeinflusst. Das unangenehm quietschende Geräusch, das sich bei einer Reibung zwischen zwei Oberflächen von Formteilen aus Partikelschaum, insbesondere aus Polystyrol-Partikelschaum (Styropor®) üblicherweise einstellt, lässt sich durch die beschriebene Oberflächenstrukturierung überraschend wirksam vermeiden, wobei die spezielle Art der Strukturierung von Fall zu Fall empirisch zu ermitteln ist, was insbesondere von der Art des verwendeten expandierbaren Polymers abhängt. Auch die Reinigungsfähigkeit der Oberflächen der hergestellten Partikelschaumformteile lässt sich durch unterschiedliche Strukturierung der Oberfläche gezielt beeinflussen.

Vorzugsweise ist das erfindungsgemäße Formwerkzeug gegenüber einer Werkzeugaufnahme thermisch entkoppelt, um unnötige Energieverluste zu vermeiden.

Die Erfindung wird anhand der Zeichnung weiter erläutert:
- Figur 1 ist eine perspektivische Ansicht eines Werkzeugteils (Formhäfte) einer Ausführungsform eines erfindungsgemäßen Formwerkzeugs;
- Figur 2 ist eine Schnittansicht durch eine andere Ausführungsform eines Werkzeugteils eines erfindungsgemäßen Formwerkzeugs;
- Figur 3 ist eine perspektivische Teilansicht, teilweise im Schnitt, einer Gruppe von drei durch Prägungen in einem definierten Abstand voneinander fixierten Schichten;
- Figur 4 ist eine Teilansicht (teilweise im Schnitt) einer anderen Gruppe von durch Prägungen gegenseitig festgelegten Schichten;
- Figur 5 ist eine schematische Schnittdarstellung einer Gruppe gegenseitig festgelegter Schichten; und
- Figur 6 ist eine schematische Schnittdarstellung einer Gruppe von miteinander verlöteten Schichten.

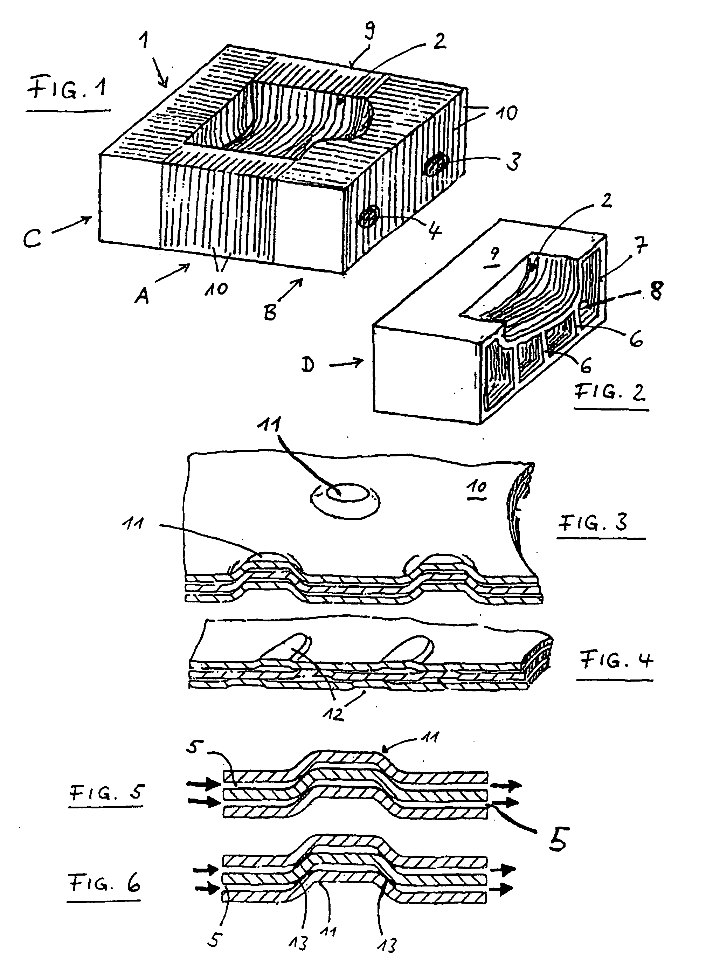

Das erfindungsgemäße Formwerkzeug besteht üblicherweise aus zwei komplementär ausgebildeten Werkzeugteilen 1, die ihrerseits aus einer endlichen Anzahl von segmentweise parallel zueinander angeordneten Schichten 10 zusammengesetzt sind. Bei dem gezeichneten Ausführungsbeispiel bestehen die Schichten 10 aus rechnergesteuert ausgeschnittenen Aluminiumblechen. Aus den Schichten 10 sind drei Stapel A, B, C (Figur 1) mit unterschiedlichen Schichtrichtungen gebildet, wobei die einzelnen Schichten innerhalb der Stapel parallel angeordnet und die Stapel unter Bildung des Werkzeugteils 1 miteinander verbunden sind. Im gezeichneten Ausführungsbeispiel verlaufen alle parallelen Schichten 10 unter einem rechten Winkel zur Werkzeugtrennebene 9.

Die einzelnen Schichten 10 sind so konturiert, dass die aus der Gesamtheit der Schichten 10 gebildeten Stapel A, B, C jeweils einen Teil des Formhohlraums 2 definieren, der mit expandierbaren Schaumstoffperlen eines thermoplastischen Kunststoffs wie z.B. EPS, EPE oder EPP gefüllt werden kann, um daraus nach dem Dampfstoßverfahren dem Formhohlraum entsprechende Partikelschaumformteile herzustellen.

Das Werkzeugteil 1 ist mit einer einzigen Zuleitung 3 und einer einzigen Ableitung 4 für gasförmige und flüssige Wärmeträger, insbesondere für Heißdampf und Kühlwasser, versehen, wobei bei der bestimmungsgemäßen Verwendung des erfindungsgemäßen Formwerkzeugs zunächst zum Verschweißen der Beads Heißdampf und danach zum Abkühlen des entstandenen Formteils und der Form Kühlwasser oder ein anderes geeignetes Kühlmedium auf demselben Wege durch das Werkzeugteil 1 hindurchgeleitet wird.

Die Schichten 10 sind in einem definierten Abstand voneinander unter Bildung von Kanälen 5 (Figuren 3 bis 6) angeordnet, die nach außen hin dicht verschlossen sind (Figur 1), aber im Inneren des Werkzeugteils 1 für den Durchtritt der gasförmigen und flüssigen Medien, die als Wärmeträger fungieren, offen sind.

Dadurch wird erreicht, dass die Heiz- und Kühlmedien sehr schnell und über große wirksame Flächen direkt zum Formhohlraum 2 geführt werden, so dass ein rascher Energietransport unter verhältnismäßig geringen Energieverlusten in beiden Richtungen, sowohl zum Aufheizen wie auch zum Abkühlen, ermöglicht wird.

Ein weiterer Vorteil des erfindungsgemäßen Formwerkzeugs besteht darin, dass die segmentierte Bauweise mit integrierter Zu- und Abführung der Heiz- und Kühlmedien die Gesamtmasse und damit auch den Gesamtenergiebedarf des Werkzeugs senken.

Bei einer anderen bevorzugten Ausführungsform der Erfindung weisen die Schichten 10 von massiven Stegen 6 unterteilte Durchbrechungen 7 auf (Figur 2), die so angeordnet sind, dass in einem aus der Gesamtheit aller Schichten 10 gebildeten Stapel D mehrere Kammern 8 gebildet sind, die das Werkzeugteil 1 durchsetzen. Diese Ausführungsform besitzt einerseits Kavitäten, die ein ausreichendes Volumen zur schnellen Verteilung der Wirkmedien (Heißdampf und Kühlwasser) gewährleisten und zu einem Wegfall der im Stand der Technik benötigten energetisch ungünstigen Dampfkammern führen und die Gesamtmasse des Werkzeuges zusätzlich senken. Um das Entweichen der Medien nach außen und ein direktes Durchströmen durch die Trennebene 9 hindurch in die jeweils andere Werkzeughälfte zu verhindern, sind die Schichten 10 an den Außenseiten des Werkzeugteils 1 druckdicht miteinander verbunden, beispielsweise durch Verschweißen, Verkleben oder Verlöten.

Die definierten Abstände der Schichten 10 untereinander können auf unterschiedliche Weise erreicht werden Wenn beispielsweise einseitig geprägte Bleche mit regelmäßigen Strukturen als Schichten 10 verwendet werden, beispielsweise solche mit Noppen-, Pyramiden- oder Fischgrätprägung, dann können die formgebenden Schichten 10 unter Berücksichtigung des Prägungsrasters so geschnitten werden, dass die Prägungen 11 im Register liegen (Figur 3) und damit formschlüssig gegen Verschieben gesichert sind.

Die Prägungen 12 (Figur 4) können aber auch versetzt zueinander liegen, so dass sich die einzelnen Schichten 10 punkt- oder linienförmig über die gesamte Fläche verteilt berühren und dadurch einen formstabilen Aufbau bis hin zur formgebenden Werkzeugwand bilden.

Ein definierter Abstand zwischen den einzelnen Schichten 10, und damit eine definierte und vorzugsweise konstante Breite der Kanäle 5 zwischen den Schichten 10 wird vorzugsweise durch einen stoffschlüssigen dreidimensionalen porösen Verbund erreicht, wenn die mit Prägungen 11 versehenen Schichten 10 im Register gestapelt werden und an den Berührungspunkten der Prägungen 11 verklebt, verlötet oder diffusionsgeschweißt werden. Vorzugsweise werden vor dem Prägen und vor dem Ausschneiden der Konturen Lotschichten auf die Bleche bzw. Schichten 10 aufgebracht, die nach dem Zusammenbau des Werkzeugs durch eine Wärmebehandlung aufschmelzen und durch Kapillarwirkung an den Berührungspunkten Lotverbindungen 13 schaffen (Figur 6).

Auf diesem Wege können verlötete Stapel von Schichten 10 umgekehrt auch wieder in die einzelnen Schichten getrennt werden und gegebenenfalls gegen anders konturierte Schichten 10 ausgetauscht werden, um Formteile mit anderer Geometrie herstellen zu können.

Die Stirnseiten der Schichten 10, die den Formhohlraum 2 begrenzen, können eine strukturierte Oberfläche aufweisen (in der Zeichnung nicht dargestellt). Die gewünschten Strukturen können dabei geätzt oder bereits beim Beschnitt der Schichten 10 in die Schnittkanten eingebracht werden. Es können auch lösliche Schichten vor dem Ätzen zwischen die Schichten (10) eingebracht werden und nach dem Ätzen ausgewaschen werden.

Die mit dem erfindungsgemäßen Formwerkzeug hergestellten Partiketschaumformteile, die vorzugsweise aus expandierbarem Polypropylen (EPP), aber auch aus EPE und EPS hergestellt werden, zeichnen sich durch eine besonders gleichmäßige Verschweißung der Partikel und eine glatte, von Dampfdüsenabdrücken freie Oberfläche mit geringer Reibungsgeräuschentwicklung aus. Die Herstellung der Formteile wird durch das Formwerkzeug beschleunigt und infolge des geringen Energieverbrauchs verbilligt.

## Patentansprüche

1. Formwerkzeug zur Herstellung von Partikelschaumformteilen, mit mindestens einem aus einer endlichen Anzahl von zumindest segmentweise parallel zueinander angeordneten Schichten (10) zusammengesetzten Werkzeugteil (1), bei dem die einzelnen Schichten (10) so konturiert sind, daß ein aus der Gesamtheit aller Schichten (10) gebildeter Stapel (A, B, C) mindestens einen Teil eines Formhohlraums (2) definiert, der mit expandierbaren Schaumstoffperlen ("beads") eines thermoplastischen Kunststoffs gefüllt werden kann, sowie mit Mitteln (3; 4) zur Zu- und Abführung von gasförmigen und flüssigen Wärmeträgem zu bzw. von den den Formhohlraum (2) umgrenzenden Schichten (10), die mindestens in ihren dem Formhohlraum (2) benachbarten Bereichen in einem definierten Abstand voneinander unter Bildung von Kanälen (5) angeordnet sind, die nach außen hin dicht verschlossen sind, aber im Inneren des Werkzeugteils (1) für den Durchtritt der gasförmigen und flüssigen Wärmeträger offen sind, **dadurch gekennzeichnet, daß** die Abstände durch ein- oder beidseitige Prägungen (11; 12), Einfräsungen oder geätzte Vertiefungen in den Schichten (10) gebildet werden.

2. Formwerkzeug nach Anspruch 1, **dadurch gekennzeichnet, daß** die Schichten (10) aus einem gut wärmeleitenden metallischen Wedestoff bestehen.

3. Formwerkzeug nach Anspruch 2, **dadurch gekennzeichnet, daß** die Schichten (10) aus Stahlblech, Aluminium oder einer Aluminiumlegierung bestehen.

4. Formwerkzeug nach einem der Ansprüche 1 bis 3, **dadurch gekennzeichnet, daß** die Schichten (10) von massiven Stegen (6) unterteilte Durchbrechungen (7) aufweisen, die so angeordnet sind, daß in einem aus der Gesamtheit aller Schichten (10) gebildeten Stapel (D) mehrere Kammern (8) gebildet sind, die das Werkzeugteil (1) durchsetzen.

5. Formwerkzeug nach Anspruch 4, **dadurch gekennzeichnet, daß** mindestens jede zweite Schicht (10) eines Stapels (D) mindestens einem als Wärmeanstauschfläche wirkenden Fortsatz aufweist, der in die Durchbrechungen (7) bzw. die Kammern (8) hineinragt.

6. Formwerkzeug nach einem der Ansprüche 1 bis 5, **gekennzeichnet durch** eine einzige Zuleitung und eine einzige Ableitung für die Wärmeträger.

7. Formwerkzeug nach einem der Ansprüche 1 bis 6, **dadurch gekennzeichnet, daß** die Prägungen (11; 12) als Wellen, Kanäle, Riffelungen oder Noppen in Form von Kegel- oder Pyramidenstümpfen ausgebildet sind.

8. Formwerkzeug nach einem der Ansprüche 1 bis 7, **dadurch gekennzeichnet, daß** die Schichten (10) einseitige Prägungen (11) aufweisen und unter Berücksichtigung des Prägungsrasters so geschnitten sind, daß die Prägungen (11) im Register liegen und damit formschlüssig gegen Verschieben gesichert sind.

9. Formwerkzeug nach einem der Ansprüche 1 bis 7, **dadurch gekennzeichnet, daß** die Prägungen (12) versetzt zueinander liegen, so daß sich die einzelnen Schichten (10) punkt- oder linienförmig über die ganze Fläche verteilt berühren.

10. Formwerkzeug nach einem der Ansprüche 1 bis 9, **dadurch gekennzeichnet, daß** die Schichten (10) untereinander durch stoffliches Fügen wie Schweißen, Diffusionsschweißen, Verkleben, Verschrauben oder Verlöten verbunden sind.

11. Formwerkzeug nach Anspruch 10, **dadurch gekennzeichnet, daß** die Schichten (10) durch Verlöten mit anderen Dünnschichten verbunden sind, die einen niedrigeren Schmelzpunkt besitzen als die Schichten (10) selbst.

12. Formwerkzeug nach einem der Ansprüche 1 bis 11, **dadurch gekennzeichnet, daß** mehrere Stapel (A, B, C) von parallel angeordneten Schichten (10) mit unterschiedlichen Schichtrichtungen miteinander verbunden sind.

13. Formwerkzeug nach einem der Ansprüche 1 bis 12, **dadurch gekennzeichnet, daß** die parallelen Schichten (10) unter einem oder mehreren vom rechten Winkel zur Werkzeugtrennebene (9) abweichenden Winkeln verlaufen.

14. Formwerkzeug nach einem der Ansprüche 1 bis 13, **dadurch gekennzeichnet, daß** die Stirnseiten der Schichten (10), die den Formhohlraum (2) begrenzen, eine strukturierte Oberfläche aufweisen.

15. Formwerkzeug nach Anspruch 14, dadurch gekenazeichnet, daß die Oberfläche der Stirnseiten geprägt oder geätzt ist.

16. Formwerkzeug nach Anspruch 14 oder 15, **dadurch gekennzeichnet, daß** die Oberfläche der Stirnseiten quadratische oder runde, erhabene oder vertiefte Querschnitte aufweist

17. Formwerkzeug nach einem der Ansprüche 1 bis 16, **gekennzeichnet durch** eine Metallhülle, die die Kanäle (5) nach außen druckdicht verschließt.

18. Formwerkzeug nach einem der Ansprüche 1 bis 16, **dadurch gekennzeichnet, daß** die Kanäle (5) nach außen durch eine härtbare Dichtmasse, durch Verkleben, Verschweißen oder Verlöten benachbarter Schichten (10) druckdicht verschlossen sind.

19. Formwerkzeug nach einem der Ansprüche 1 bis 18, **dadurch gekennzeichnet, daß** es gegenüber einer Werkzeugaufnahme thermisch entkoppelt ist.

## Claims

1. A mould for the production of particle foam moulded articles, having at least one moulding part (1) assembled from a finite number of layers (10) which are parallel to each other, at least in segments, in which the individual layers (10) have contours such that a stack (A, B, C) formed by the totality of all layers (10) defines at least one part of a mould cavity (2) which can be filled with expandable beads of a thermoplastic polymer, and having means (3; 4) for the inlet and outlet of gaseous and liquid heat transfer media to or from the layers (10) circumscribing the mould cavity (2) and arranged, at least in their areas adjacent to said mould cavity (2), at a defined distance from each other to form channels (5) which are outwardly sealed but are open inside said moulding part (1) for the passage of the gaseous and liquid heat transfer media, **characterised in that** the distances arc formed on one or both sides by embossments (11, 12), millings or etched indentations in the layers (10).

2. The mould according to Claim 1, **characterised in that** the layers (10) consist of a good heat-conducting metallic material.

3. The mould according to Claim 2, **characterised in that** the layers (10) consist of sheet steel, aluminium or of an aluminium alloy.

4. The mould according to any one of Claims 1 to 3, **characterised in that** the layers (10) show openings (7) that are subdivided by solid webs (6) and arranged such that in one stack (D) formed by the totality of all layers (10), a plurality of chambers (8) are created which permeate the moulding part (1).

5. The mould according to Claim 4, **characterised in that** at least each second layer (10) of a stack (D) has at least one appendage that acts as a heat exchange surface and extends into the openings (7) or the chambers (8).

6. The mould according to any one of Claims 1 to 5, **characterised by** one single inlet and one single outlet for the heat transfer media.

7. The mould according to any one of Claims 1 to 6, **characterised in that** the embossments (11,12) are formed as waves, channels, ribbings or knobs shaped like truncated cones or truncated pyramids.

8. The mould according to any one of Claims 1 to 7, **characterised in that** said layers (10) are embossed (11) on one side and cut according to the pattern of the embossments such that the embossments (11) are aligned and thereby securely interlocked against displacement.

9. The mould according to any one of Claims 1 to 7, **characterised in that** the embossments (12) are offset from each other such that the individual layers (10) are in point contact or in linear contact over the entire surface.

10. The mould according to any one of Claims 1 to 9, **characterised in that** the layers (10) are bonded to each other by a material assembly technique such as welding, diffusion welding, gluing, screwing or soldering.

11. The mould according to Claim 10, **characterised in that** the layers (10) are connected to other thin layers by soldering, said thin layers having a lower melting point than the layers (10) themselves.

12. The mould according to any one of Claims 1 to 11, **characterised in that** a plurality of stacks (A, B, C) of layers (10) which are arranged in parallel and have different directions are connected to each other.

13. The mould according to any one of Claims 1 to 12, **characterised in that** the parallel layers (10) run at one or several angles that differ from the right angle to the plane of separation (9) of the mould.

14. The mould according to any one of Claims 1 to 13, **characterised in that** the front sides of the layers (10) that limit the mould cavity (2) have a structured surface.

15. The mould according to Claim 14, **characterised in that** the surface of the front sides is embossed or etched.

16. The mould according to Claim 14 or 15, **characterised in that** the surface of the front sides has square or round, raised or recessed cross sections.

17. The mould according to any one of Claims 1 to 16, **characterised by** a metal skin that outwardly pressure-seals the channels (5).

18. The mould according to any one of Claims 1 to 16, **characterised in that** said channels (5) are outwardly pressure-sealed by a curable sealant, by bonding, welding or soldering of adjacent layers (10).

19. The mould according to any one of Claims 1 to 18, **characterised in that** it is thermally decoupled from a mould support fixture.

## Revendications

1. Outil de moulage pour la fabrication de pièces moulées en mousse à base de particules, avec au moins une partie d'outil (1) composée d'un nombre fini de couches (10), disposées par segments parallèlement les unes aux autres, partie d'outil pour laquelle les différentes couches (10) sont profilées de manière qu'une pile (A, B, C), formée à partir de la totalité de toutes les couches (10), définisse au moins une partie d'un espace creux de moulage (2) qui peut être rempli de perles ("beads") d'une matière synthétique thermoplastique, ainsi que comprenant des moyens (3 ; 4) pour l'amenée et l'évacuation de caloporteurs gazeux et liquides depuis les couches (10) délimitant l'espace creux de moulage (2), qui sont disposées, au moins dans leurs zones voisines de l'espace creux de moulage (2), sous un espacement défini les unes par rapport aux autres en formant des canaux (5) qui sont fermés de façon étanche vers l'extérieur, mais qui sont ouverts à l'intérieur de la partie d'outil (1) pour laisser le passage aux caloporteurs gazeux et liquides, **caractérisé en ce que** les espacements sont formés par des façonnages tridimensionnels (11 ; 12), des fraisages ou des cavités obtenues par gravage, sur une ou les deux faces, dans les couches (10).

2. Outil de moulage selon la revendication 1, **caractérisé en ce que** les couches (10) sont formées d'un matériau métallique bon conducteur de la chaleur.

3. Outil de moulage selon la revendication 2, **caractérisé en ce que** les couches (10) sont formées de tôle d'acier, d'aluminium ou d'un alliage d'aluminium.

4. Outil de moulage selon l'une des revendications 1 à 3, **caractérisé en ce que** les couches (10) présentent des passages (7) subdivisés par des nervures (6) massives, les passages (7) étant disposés de manière que, dans une pile (D) formée de la totalité de toutes les couches (10), plusieurs chambres (8), qui traversent la partie d'outil (1), soient formées.

5. Outil de moulage selon la revendication 4, **caractérisé en ce qu'**au moins chaque deuxième couche (10) d'une pile (D) présente au moins un prolongement, agissant comme face d'échange thermique et pénétrant dans les passages (7), respectivement les chambres (8).

6. Outil de moulage selon l'une des revendications 1 à 5, **caractérisé par** une conduite d'amenée unique et une conduite d'évacuation unique pour les caloporteurs.

7. Outil de moulage selon l'une des revendications 1 à 6, **caractérisé en ce que** les façonnages tridimensionnels (11 ; 12) sont réalisés sous la forme d'ondulations, de canaux, de cannelures ou de tétons, ayant la forme de troncs de cône ou de pyramide.

8. Outil de moulage selon l'une des revendications 1 à 7, **caractérisé en ce que** les couches (10) présentent des façonnages tridimensionnels (11) sur une face et, en prenant en considération la trame du motif de façonnage, sont coupées de manière que les façonnages tridimensionnels (11) soient en repérage et soient ainsi assurés, par une liaison par ajustement de forme, contre tout déplacement.

9. Outil de moulage selon l'une des revendications 1 à 7, **caractérisé en ce que** les façonnages tridimensionnels (12) sont décalés les uns par rapport aux autres, de sorte que les différentes couches (10) soient en contact ponctuel ou linéaire, de façon répartie sur toute la surface.

10. Outil de formage selon l'une des revendications 1 à 9, **caractérisé en ce que** les couches (10) sont reliées entre elles par des joints faisant appel à la matière, tel que par soudage par fusion, soudage par diffusion, collage, vissage ou brasage.

11. Outil de moulage selon la revendication 10, **caractérisé en ce que** les couches (10) sont reliées ensemble par brasage à d'autres couches minces, ayant un point de fusion inférieur à celui des couches (10) elles-mêmes.

12. Outil de moulage selon l'une des revendications 1 à 11, **caractérisé en ce que** plusieurs piles (A, B, C) de couches (10) disposées parallèlement sont reliées ensemble avec des directions de couches différentes.

13. Outil de moulage selon l'une des revendications 1 à 12, **caractérisé en ce que** les couches (10) parallèles s'étendent sous un angle, ou sous plusieurs angles, différents d'un angle droit, par rapport au plan de séparation d'outil (9).

14. Outil de formage selon l'une des revendications 1 à 13, **caractérisé en ce que** les faces frontales des couches (10), qui délimitent l'espace creux de moulage (2), présentent une surface structurée.

15. Outil de moulage selon la revendication 14, **caractérisé en ce que** la surface des faces frontales est façonnée tridimensionnellement ou gravée.

16. Outil de moulage selon la revendication 14 ou 15, **caractérisé en ce que** la surface des faces frontales présente des sections transversales carrées ou rondes, en relief ou en creux.

17. Outil de moulage selon l'une des revendications 1 à 16, **caractérisé par** une douille métallique, fermant les canaux (5) de façon étanche à la pression vers l'extérieur.

18. Outil de moulage selon l'une des revendications 1 à 16, **caractérisé en ce que** les canaux (5) sont fermés de façon étanche à la pression vers l'extérieur par une masse d'étanchéité durcissable, par collage, soudage ou brasage de couches (10) voisines.

19. Outil de moulage selon l'une des revendications 1 à 18, **caractérisé en ce qu'**il est désaccouplé thermiquement vis-à-vis d'un support d'outils.
